(19) **Europäisches Patentamt / European Patent Office / Office européen des brevets**

(11) **EP 1 629 469 B1**

(12) **EUROPEAN PATENT SPECIFICATION**

(45) Date of publication and mention
of the grant of the patent:
**07.11.2007 Bulletin 2007/45**

(51) Int Cl.:
**G11B 7/095** (2006.01)

(21) Application number: **04732686.3**

(22) Date of filing: **13.05.2004**

(86) International application number:
**PCT/IB2004/050684**

(87) International publication number:
**WO 2004/105003 (02.12.2004 Gazette 2004/49)**

(54) **DISC DRIVE APPARATUS, AND TILT COMPENSATION METHOD**

PLATTENLAUFWERK UND METHODE ZUM NEIGUNGSAUSGLEICH

LECTEUR DE DISQUE ET PROCEDE DE COMPENSATION D'INCLINAISON

(84) Designated Contracting States:
**AT BE BG CH CY CZ DE DK EE ES FI FR GB GR HU IE IT LI LU MC NL PL PT RO SE SI SK TR**

(30) Priority: **21.05.2003 EP 03101440**

(43) Date of publication of application:
**01.03.2006 Bulletin 2006/09**

(73) Proprietor: **Koninklijke Philips Electronics N.V.
5621 BA Eindhoven (NL)**

(72) Inventor: **RAAYMAKERS, Jeroen, A., L., J.
NL-5656 AA Eindhoven (NL)**

(74) Representative: **van Oudheusden-Perset, Laure E. et al
Société Civile SPID
156, Boulevard Haussmann
75008 Paris (FR)**

(56) References cited:
**US-A- 6 137 754         US-A1- 2002 060 964**

- **PATENT ABSTRACTS OF JAPAN vol. 2000, no. 13, 5 February 2001 (2001-02-05) & JP 2000 298861 A (PIONEER ELECTRONIC CORP), 24 October 2000 (2000-10-24) -& US 6 690 632 B1 (BRADSHAW ALEX ET AL) 10 February 2004 (2004-02-10)**
- **PATENT ABSTRACTS OF JAPAN vol. 2000, no. 19, 5 June 2001 (2001-06-05) & JP 2001 052362 A (RICOH CO LTD), 23 February 2001 (2001-02-23)**

**Description**

FIELD OF THE INVENTION

The present invention relates in general to a disc drive apparatus for writing/reading information into/from an optical storage disc, wherein the disc is rotated and a write/read head is moved radially with respect to the rotating disc. The present invention is applicable in the case of optical as well as magneto-optical disc systems. Hereinafter, the wording "optical disc drive" will be used, but it is to be understood that this wording is intended to also cover magneto-optical disc systems.

BACKGROUND OF THE INVENTION

As is commonly known, an optical storage disc comprises at least one track, either in the form of a continuous spiral or in the form of multiple concentric circles, of storage space where information may be stored in the form of a data pattern. Optical discs may be read-only type, where information is recorded during manufacturing, which information can only be read by a user. The optical storage disc may also be a writable type, where information may be stored by a user. Although the present invention can also be applied to optical discs of the read-only type, the present invention is particularly intended for writable optical discs. Therefore, the present invention will hereinafter specifically be explained for the case of writable discs, without the intention of restricting the scope of the invention to such example.

More particularly, although the present invention is applicable to writable discs of different types, such as for instance CD-RW, the present invention is particularly devised for the case of recordable DVD. Therefore, the present invention will hereinafter specifically be explained for the case of recordable DVD, without the intention of restricting the scope of the invention to such example.

For writing information in the storage space of the optical storage disc, or for reading information from the disc, an optical disc drive comprises, on the one hand, rotating means for receiving and rotating an optical disc, and on the other hand optical means for generating an optical beam, typically a laser beam, and for scanning the storage track with said laser beam. Since the technology of optical discs in general, the way in which information can be stored in an optical disc, and the way in which optical data can be read from an optical disc, is commonly known, it is not necessary here to describe this technology in detail.

For rotating the optical disc, an optical disc drive typically comprises a motor, which drives a hub engaging a central portion of the optical disc. Usually, the motor is implemented as a spindle motor, and the motor-driven hub may be arranged directly on the spindle axle of the motor.

For optically scanning the rotating disc, an optical disc drive comprises a light beam generator device (typically a laser diode), an objective lens for focussing the light beam in a focal spot on the disc, and an optical detector for receiving the reflected light reflected from the disc and for generating an electrical detector output signal.

During operation, the light beam should remain focussed on the disc. To this end, the objective lens is arranged axially displaceable, and the optical disc drive comprises focal actuator means for controlling the axial position of the objective lens. Further, the focal spot should remain aligned with a track or should be capable of being positioned with respect to a new track. To this end, at least the objective lens is mounted radially displaceable, and the optical disc drive comprises radial actuator means for controlling the radial position of the objective lens.

For any reason, it may be that the optical disc suffers from tilt. Tilt of the optical disc can be defined as a situation where the surface of the optical disc is not exactly perpendicular to the rotation axis. Tilt can be caused by the optical disc being tilted as a whole with respect to the laser beam (e.g. because the motor axle is tilted with respect to the frame; this is indicated as static tilt), but tilt is usually caused by the optical disc being warped, and as a consequence the amount of tilt depends on the location on disc. Especially DVD systems, which have a relatively large numerical aperture (NA), are sensitive to disc tilt. Therefore, tilt compensation mechanisms have been developed. Typically, in a disc drive apparatus having tilt compensation, at least the objective lens is mounted pivotably, and the optical disc drive comprises tilt actuator means for controlling the tilt position of the objective lens. Alternatively, it is possible that the orientation of the disc itself is corrected. Other types of controllable tilt correction mechanisms are possible, too.

In order to be able to practice tilt compensation, prior art optical disc drives are provided with a tilt detector for detecting a tilt angle and generating a tilt measuring signal indicating the tilt angle, and a tilt controller receiving the tilt measuring signal from the tilt detector and controlling the tilt actuator means in such a way that the tilt angle is reduced or even made zero. In a specific class of such prior art optical disc drives, the tilt detector is based on a processing of the electrical output signal from the optical detector. For instance, US-6.157.600 discloses a tilt control method which is based on processing a radial error signal indicated as the radial push-pull signal. The publication shows that the amplitude K of the push-pull tracking error signal TE is maximal when the tilt angle is 0° and decreases with increasing tilt angle. The relation between amplitude K and tilt angle is given as a graph obtained from simulation. In practice, the amplitude K is measured and used as measuring value of the tilt angle.

A disadvantage of this prior art system is that it can only be used, at least reliably, in the case of an optical disc having pits formed in a track, especially first shifted pits displaced to a first side of the track and second shifted pits displaced to a second side of the track. In the case of a blank or only partly written DVD recordable disc, no such pits are present, leading to a bad signal/noise-ratio so that said prior art method does not lead to reliable results.

SUMMARY OF THE INVENTION

A main objective of the present invention is to overcome this drawback.

An important objective of the present invention is to provide a new tilt compensation method for an optical disc drive apparatus.

Especially, the present invention aims to provide a tilt compensation method for an optical disc drive apparatus, capable of compensating tilt in the case of written discs, blank discs, and discs being partly written and partly blank.

A further objective of the present invention is to be able to drive the tilt actuator to an optimal position without necessarily having to measure the actual tilt.

Prior art methods are based on first measuring the actual tilt, and then taking steps to reduce the tilt. The present invention takes a basically different approach. In contrast to prior art systems, the present invention basically varies the tilt actuator and sets the tilt actuator to a position best suited for optical read/write, especially with a view to minimizing optical aberrations, without it being necessary to know the absolute value of the tilt. It is noted that one of the possible optical aberrations is known as "coma"; this very dominant type of optical aberration is caused *inter alia* by tilt.

According to a first aspect of the present invention (cf. the method of claim 1), a tilt-dependent parameter is selected, of which it is known that it has an extreme value (maximum or minimum/zero) when the tilt actuator has a position which is optimal, or sufficiently close to optimal, regarding minimal optical aberrations. By way of preferred but not limiting example, this tilt-dependent parameter may be the amplitude of a push-pull tracking error signal, such as for instance the 3-spots push-pull signal from the error channel or the 1-spot push-pull signal from the wobble channel.

According to a second aspect of the present invention, the tilt actuator is set to a position where said tilt-dependent parameter has its extreme value.

According to a third aspect of the present invention, the setting of the tilt actuator is varied, and the value of said tilt-dependent parameter is measured for several different settings of the tilt actuator. The measuring results are analysed, and an optimum setting for the tilt actuator is calculated. This analysis and calculation may comprise interpolation of the measuring results and/or fitting the measuring results to a suitable formula.

According to a fourth aspect of the present invention, the disc drive apparatus (cf. the apparatus of claim 15) is operated while the tilt actuator is set to its optimum setting as calculated.

BRIEF DESCRIPTION OF THE DRAWINGS

These and other aspects, features and advantages of the present invention will be further explained by the following description with reference to the drawings, in which same reference numerals indicate same or similar parts, and in which:

Figure 1A schematically illustrates an optical disc drive;
Figure 1B is a block diagram illustrating schematically an optical detector connected to a signal processor;
Figure 2 is a graph, illustrating schematically the relationship between net tilt and the amplitude of a tracking error signal;
Figure 3 is a graph, illustrating measurement of the amplitude of a tracking error signal as a function of pivot angle of an optical lens;
Figure 4 is a flow chart illustrating steps of a measuring method according to the present invention;
Figure 5 is a graph for illustrating amplitude measurements in conjunction with lens wobbling.

DESCRIPTION OF THE INVENTION

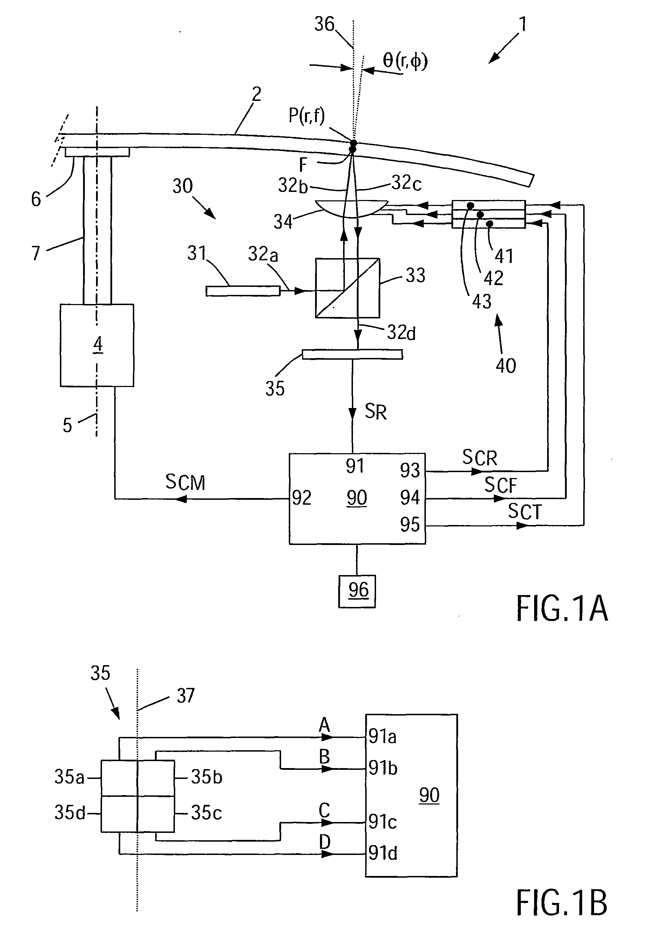

Figure 1A schematically illustrates an optical disc drive apparatus 1, suitable for storing information on or reading information from an optical disc 2, typically a DVD. For rotating the disc 2, the disc drive apparatus 1 comprises a motor 4 fixed to a frame (not shown for sake of simplicity), defining a rotation axis 5. For receiving and holding the disc 2, the disc drive apparatus 1 may comprise a turntable or clamping hub 6, which in the case of a spindle motor 4 is mounted on the spindle axle 7 of the motor 4.

The disc drive apparatus 1 further comprises an optical system 30 for scanning tracks (not shown) of the disc 2 by an optical beam. More specifically, the optical system 30 comprises a light beam generating means 31, typically a laser such as a laser diode, which is arranged to generate a light beam 32a which passes a beam splitter 33 and an objective lens 34. The objective lens 34 focuses the light beam 32b in a focal spot F on the disc 2. The light beam 32b reflects from the disc 2 (reflected light beam 32c) and passes the objective lens 34 and the beam splitter 33 (beam 32d) to reach an optical detector 35.

Associated with the apparatus 1, a rectangular coordinate system XYZ will be used in the following, wherein the rotation axis 5 will be taken as Z-axis. The radial direction will be taken as X-axis, i.e. perpendicular to the Z-axis, such that the focal spot F lies in the XZ-plane. The tangential direction will be taken as Y-axis, i.e. perpendicular to the X-axis and the Z-axis. Associated with the disc 2, a polar coordinate system r, $\varphi$ will be used.

The disc drive apparatus 1 further comprises an actuator system 40, which comprises a radial actuator 41 for radially (X-direction) displacing the objective lens 34 with respect to the disc 2. Since radial actuators are known per se, while the present invention does not relate to the design and functioning of such radial actuator, it is not necessary here to discuss the design and functioning of a radial actuator in great detail.

For achieving an maintaining a correct focusing of the light beam 32b, exactly on the desired location of the disc 2, said objective lens 34 is mounted axially displaceable (Z-direction), while further the actuator system 40 of disc drive apparatus 1 also comprises a focal actuator 42 arranged for axially displacing the objective lens 34 with respect to the disc 2. Since axial actuators are known per se, while further the design and operation of such axial actuator is no subject of the present invention, it is not necessary here to discuss the design and operation of such focal actuator in great detail.

For the purpose of tilt compensation, said objective lens is mounted such as to be pivotable about a pivot axis which is directed parallel to the Y-axis, such that an optical axis 36 of the objective lens 34 is always located in the XZ-plane. Preferably, said pivot axis coincides with the optical centre of the objective lens 34. A pivot angle ($\psi$) will be defined as the angle between the Z-axis and the optical axis 36 of the objective lens 34. Further, the actuator system 40 of disc drive apparatus 1 also comprises a pivot actuator 43, also indicated as tilt actuator, arranged for pivoting the objective lens 34 with respect to the disc 2.

It is noted that means for supporting the objective lens with respect to an apparatus frame, and means for axially and radially displacing the objective lens, are generally known per se. Since the design and operation of such supporting and displacing means are no subject of the present invention, it is not necessary here to discuss their design and operation in great detail. The same applies to means for pivoting the objective lens.

It is further noted that the radial actuator 41, focal actuator 42, and pivot actuator 43 may be implemented as one integrated 3D-actuator.

The disc drive apparatus 1 further comprises a control circuit 90 having a first output 92 connected to a control input of the motor 4, having a second output 93 coupled to a control input of the radial actuator 41, having a third output 94 coupled to a control input of the focal actuator 42, and having a fourth output 95 coupled to a control input of the pivot actuator 43. The control circuit 90 is designed to generate at its first output 92 a control signal $S_{CM}$ for controlling the motor 4, to generate at its second control output 93 a control signal $S_{CR}$ for controlling the radial actuator 41, to generate at its third output 94 a control signal $S_{CF}$ for controlling the focal actuator 42, and to generate at its fourth output 95 a control signal $S_{CT}$ for controlling the pivot actuator 43.

The control circuit 90 further has a read signal input 91 for receiving a read signal $S_R$ from the optical detector 35.

Figure 1B illustrates that the optical detector 35 comprises a plurality of detector segments, in this case four detector segments 35a, 35b, 35c, 35d, capable of providing individual detector signals A, B, C, D, respectively, indicating the amount of light incident on each of the four detector quadrants, respectively. A centre line 37, separating the first and fourth segments 35a and 35d from the second and third segments 35b and 35c, is oriented according to the Y-direction (track direction). Since such four-quadrant detector is commonly known per se, it is not necessary here to give a more detailed description of its design and functioning.

Figure 1B also illustrates that the read signal input 91 of the control circuit 90 actually comprises four inputs 91a, 91b, 91c, 91d for receiving said individual detector signals A, B, C, D, respectively. The control circuit 90 is designed to process said individual detector signals A, B, C, D, in order to derive data and control information therefrom, as will be clear to a person skilled in the art. For instance, a data signal $S_D$ can be obtained by summation of all individual detector signals A, B, C, D according to

$$S_D = A + B + C + D \qquad\qquad (1)$$

Further, a one-spot push-pull tracking error signal $S_{TE}$ can be obtained by summation of the signals A and D from all individual detector segments 35a and 35d on one side of the centre line 37, summation of the signals B and C from all individual detector segments 35b and 35c on the other side of the centre line 37, and taking the difference of these two summations, according to

$$S_{TE} = (A + D) - (B + C) \qquad\qquad (2)$$

In figure 1A, a point P on the disc 2 is shown, having polar coordinates r and $\varphi$. In an ideal case, the normal to the disc surface in point P(r,$\varphi$) is exactly parallel to the Z-axis, but in the case where the disc 2 has a warped surface, as shown, the normal in point P(r,$\varphi$) makes an angle $\theta$(r,$\varphi$) with the Z-axis. This angle $\theta$(r,$\varphi$) will be indicated as the tilt in point P(r,$\varphi$). The tilt may vary over the surface of the disc, in other words the tilt $\theta$(r,$\varphi$) may be a function of radial coordinate r and angular coordinate $\varphi$.

As a result of disc tilt, the focus spot F is no longer circular, and this aberration ("coma") may lead to crosstalk, which may cause write errors and/or read errors.

Further, servo signals are sensitive to tilt, and also the wobble signal is sensitive to tilt.

In order to avoid these problems, it is desirable that the optical beam 32b incident on the disc 2 is substantially perpendicular to the disc surface, which can be obtained by giving the objective lens 34 a pivot position such that the pivot angle $\psi$ of the lens equals the tilt $\theta$ of the disc. Then, the net tilt of the disc 2 with respect to the optical beam 32b is zero. In the following, the net tilt NT shall be defined as NT = $\theta$-$\psi$.

The present invention uses a tilt-dependent parameter whose value depends on the net tilt NT, such that its value has an optimum when the net tilt NT equals zero. There are several tilt-dependent parameters suitable for this purpose. Although not essential, it is preferred that such tilt-dependent parameter is derivable from the detector 35 output signal $S_R$. The amplitude $A_{TE}$ of the tracking error signal $S_{TE}$ has proved to be very suitable for this purpose. Therefore, by way of non-limiting example, the present invention will be further explained for the case of this parameter being used.

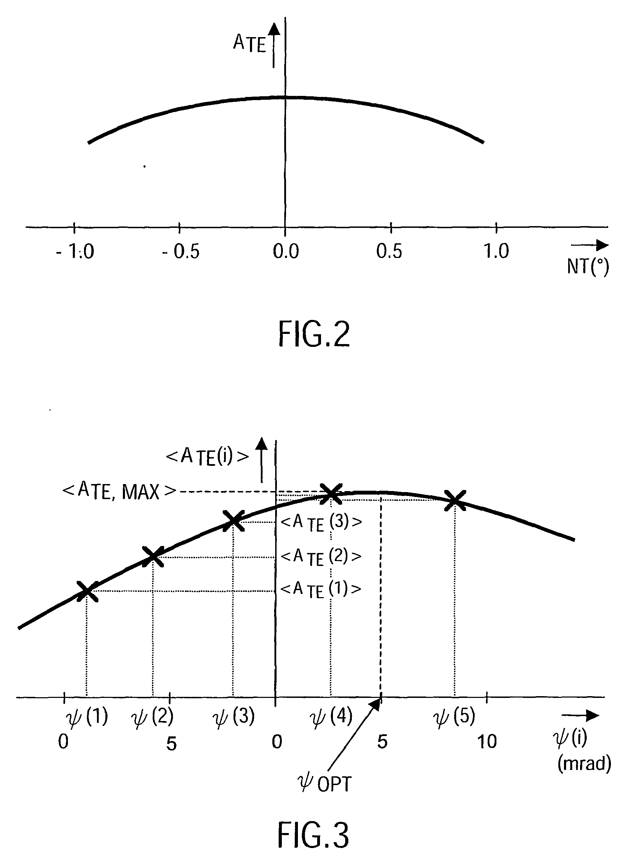

Figure 2 is a graph, illustrating the relationship between the tracking error signal amplitude $A_{TE}$ (vertical axis, arbitrary units) and the net tilt NT (horizontal axis, degree units). For small values of NT, said relationship can be considered as a parabolic relationship having its maximum at NT=0°.

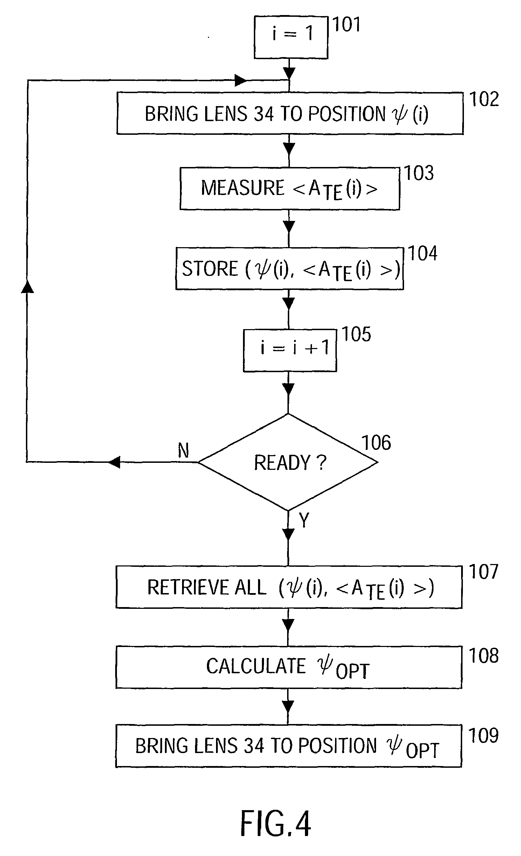

In principle, tilt may depend on the radial coordinate r and on the angular coordinate $\varphi$. The present invention is suitable for compensating tilt, both in respect of the dependency on the radial coordinate r and on the angular coordinate $\varphi$. However, the average tilt (averaged over $\varphi$=0-2$\pi$) at a radius r is usually dominant over the angular dependency. Further, if the angular dependency would be taken into account, in a situation where the lens would be held stationary at one track, the lens might have to be "wobbled" at a relatively high frequency. Preferably, the lens is held still in a situation where the lens would be held stationary at one track. Therefore, it is preferred that only the radial dependency is taken into account and that the angular dependency is ignored, or averaged out. Figures 3 and 4 illustrate the basic steps of such a preferred tilt compensation method according to the present invention.

In a first step, the control circuit 90 generates its pivot control signal $S_{CT}$ such that the pivot actuator 43 brings [102] the objective lens 34 to a first pivot position, characterised by a first pivot angle $\psi$(1). It is noted that the exact value of the first pivot angle $\psi$(1) can, in principle, be selected freely. In this position, the control circuit 90 measures [103] the tracking error signal amplitude $A_{TE}$(1) over an entire disc revolution, and calculates the average value <$A_{TE}$(1)>. The combination of first pivot angle $\psi$(1) and corresponding average tracking error signal amplitude <$A_{TE}$(1)> is stored [104] in a memory 96 associated with the control circuit 90.

Then, the control circuit 90 generates its pivot control signal $S_{CT}$ such that the pivot actuator 43 brings the objective lens 34 to a second pivot position, characterised by a second pivot angle $\psi$(2). Again, the tracking error signal amplitude $A_{TE}$(2) is measured, averaged over an entire disc revolution, and the combination of second pivot angle $\psi$(2) and corresponding average tracking error signal amplitude <$A_{TE}$(2)> is stored in said memory 96.

The above is repeated [105; 106] for multiple pivot angles $\psi$; each time resulting in a combination of pivot angle $\psi$(i) and corresponding average tracking error signal amplitude <$A_{TE}$(i)>.

After a certain number of measurements, for instance 7 measurements at 7 different pivot angles, the control circuit 90 retrieves [107] the measurement results ($\psi$(i),<$A_{TE}$(i)>) from said memory 96, and calculates [108] at which value $\psi_{OPT}$ of the pivot angle $\psi$ the average tracking error signal amplitude <$A_{TE}$> has its extreme value.

Figure 3 is a graph illustrating an example of such measurements, wherein the average tracking error signal amplitude <$A_{TE}$(i)> (vertical axis, arbitrary units) is plotted against the corresponding pivot angle $\psi$(i) (horizontal axis, mrad units). The crosses indicate the measuring results.

As should be clear to a person skilled in the art, any function p(q) having a maximum for q = $q_M$ can, within a small range around this maximum $q_M$, be reasonably approximated by a quadratic function according to

$$p(q) \approx c_0 + c_1 \cdot (q-q_M) + c_2 \cdot (q-q_M)^2$$

wherein $c_0$, $c_1$, and $c_2$ are constants. Finding an optimum fit for measurements $p_i(q_i)$ is equivalent to finding optimum values for $q_M$, and $c_0$, $c_1$, and $c_2$. Usually, this is done by the well-known least-squares method, which needs not be explained here. In any case, it should be clear to a person skilled in the art that it is possible to calculate, on the basis of several measurements around the maximum of such function, an optimum parabolic fit, and consequently it is possible to calculate $q_M$ and $p_M(q_M)$.

In figure 3, the curve 80 illustrates such a parabolic fit. This fit has a maximum point 81 having coordinates $\psi_{OPT}$ and $A_{TE,MAX}$. From this curve it can be seen that, in the case of this example, the average tracking error signal amplitude $<A_{TE}>$ has its maximum value $A_{TE,MAX}$ at a pivot angle $\psi_{OPT}$ of 5 mrad.

During subsequent operation of the disc drive apparatus 1, the control circuit 90 generates its pivot control signal $S_{CT}$ such that the pivot actuator 43 brings [109] the objective lens 34 to the optimum pivot angle $\psi_{OPT}$. The tracking error signal amplitude $A_{TE}$ then is at its maximum, at least on average. With reference to figure 2, this means that the net tilt NT is zero.

Thus, the tilt $\theta$ of the disc 2 is now compensated optimally.

It is noted here that the present invention does not actually calculate the net tilt for a certain set pivot angle $\psi$, nor does the method of the present invention requires such calculation. The method of the present invention seeks for the maximum value of the amplitude $A_{TE}$, based on the understanding that in such a situation the net tilt is zero. This applies even if the optical sensor output signal would fluctuate for any reason, because such fluctuation would affect all measurements equally but would leave the location of the optimum value $\psi_{OPT}$ unaffected.

In the above, it is mentioned that the measurement data are stored in a memory, and that parabolic fit is calculated after a predetermined number of measurements have been performed. It is also possible that a parabolic fit is calculated after three measurements have been performed, and that the parabolic fit is updated after each further measurement, in order to save memory locations.

In order to be able to obtain a tracking error signal $S_{TE}$ suitable for performing the measurements described above, it is required that at least one track-crossing occurs during each measurement. In practice, there will always be some track-crossings due to disc eccentricity and turntable eccentricity and, even in the case of a perfect disc and perfect turntable, one track-crossing will occur each revolution due to the spiral shape of the track. However, it is not certain whether during a portion of a revolution one or more track-crossings actually occur. This can be forced by slightly wobbling the radial actuator at a frequency higher than the rotational speed of the disc, but such is not preferred. Therefore, in the absence of such wobbling, it is preferred that each measurement takes a measuring time at least as long as the duration of one disc revolution; more preferably, the measuring time is substantially equal to the rotational period of the disc, so that the measured result $<A_{TE}>$ is an average value over one disc revolution, as already mentioned.

Nevertheless, the principles of the present invention are not limited to averaging over one disc revolution. In principle, especially in cases where a sufficient number of track crossings is experienced, it is possible to take a plurality of individual measurements $A_{TE}(r,\varphi)(i)$ at a plurality of locations $\varphi$ at one fixed radius $r$, and to repeat this plurality of measurements for several values of the pivot angle $\psi(i)$. Then, for each such location $(r,\varphi)$, a number of measurement results are obtained as function of the pivot angle $\psi(i)$, and the optimum pivot angle $\psi_{OPT}(r,\varphi)$ can be calculated for each such location $(r,\varphi)$. Then, during write or read, at a certain radius $r$, the pivot actuator 43 may be set as a function of the angular coordinate $\varphi$, in accordance with said optimum pivot angle $\psi_{OPT}(r,\varphi)$ for each location $(r,\varphi)$.

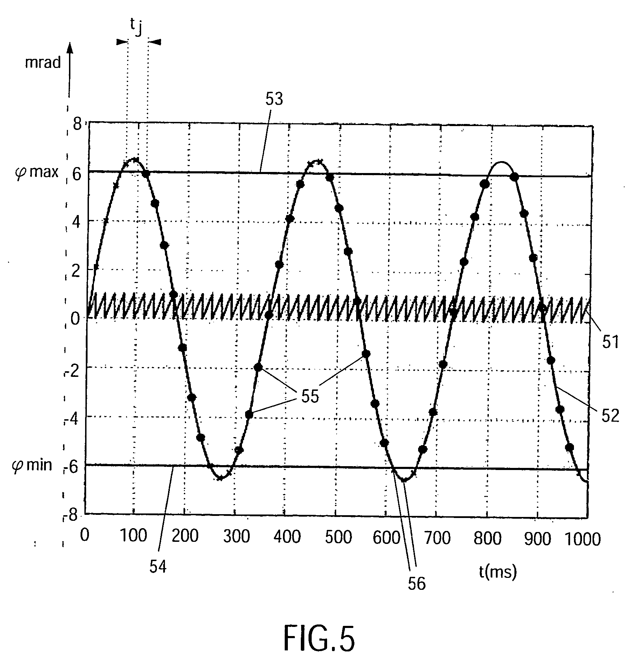

In the above, it is explained that the amplitude $A_{TE}$ of the tracking error signal $S_{TE}$ is measured for several pivot positions $\psi(i)$ of the optical lens 34. In principle, these measurements can be performed by bringing the optical lens 34 to a certain pivot position and holding the optical lens 34 stationary during measuring, followed by a displacement to a next pivot position and holding the optical lens 34 stationary again, etcetera. Such stepwise displacement of the optical lens is, however, not preferred, because it may give rise to undesirable vibrations of the lens, which leads to prolonged measuring times due to the fact that it takes some time before said vibrations have reduced. Such vibrations and possible other disturbances can be minimized by submitting the lens to a continuous, harmonic movement (tilt wobble) at a frequency substantially smaller than the rotational speed of the disc. This embodiment of the present invention is illustrated in figure 5.

In the graph of figure 5, the horizontal axis represents time in milliseconds. Curve 51 is a tacho signal, representing the revolutions of the disc; in this example, the rotational speed of the disc is 52 Hz.

Curve 52 represents the tilt control signal $S_{CT}$ for the tilt actuator 43, and hence represents the pivot angle $\psi$ of the lens. In this example, the lens is wobbled at a frequency of 2.75 Hz. The vertical axis at the lefthand side of the graph corresponds to angle units in mrad.

The horizontal lines 53 and 54 represent the boundaries $\psi_{MIN}$ and $\psi_{MAX}$ of a pivot angle range $[\psi_{MIN}, \psi_{MAX}]$ in which the measurements are to be taken into account.

Each disc revolution corresponds to a measurement of $<A_{TE}(i)>$; the corresponding pivot angles $\psi(i)$ (also averaged over one disc revolution in this example) are indicated as open circles 55 for pivot angles $\psi(i)$ within said range $[\psi_{MIN}, \psi_{MAX}]$ and crosses 56 for pivot angles $\psi(i)$ outside said range $[\psi_{MIN}, \psi_{MAX}]$. In this example, 7 measurements $A_{TE}(i)[i=1-7]$ are performed at 7 pivot angles $\psi(i)[i=1-7]$ within said range $[\psi_{MIN}, \psi_{MAX}]$ during one half period of the wobble movement, i.e. during one "sweep" of the lens.

It is noted that, in principle, one "sweep" of the lens suffices to enable calculation of an optimum value $\psi_{OPT}$. Then, the measuring process takes one half period of the wobble movement, i.e, slightly less than 200 ms in this example. However, if desired, the measurements may continue during further sweeps of the lens, in order to increase accuracy.

The above-described procedure takes place at one specific radius $r_j$ of the disc, i.e. at one setting of the radial actuator 41. Since the tilt $\theta$ may vary over the disc, the optimum pivot angle $\psi_{OPT}$ should preferably be calculated at a number of different radii $r_j[j=1-N_r]$. This requires that the above-described procedure should be performed at each individual of said different radii $r_j[j=1-N_r]$, i.e. $N_r$ different settings of the radial actuator 41, which results in $N_r$ different optimum pivot angles $\psi_{OPT}(r_j)[j=1-N_r]$ each corresponding to one of said selected measuring radii $r_j$. The calculated optimum pivot angles $\psi_{OPT}(r_j)[j=1-N_r]$ are stored in a memory associated with the control circuit 90, for instance said memory 96, in relationship to the corresponding measuring radii $r_j$, for instance in the form of a look-up table. During operation of the disc drive apparatus, the control circuit 90 always selects the control signal $S_{CT}$ for the tilt actuator 43 on the basis of the information in said memory and considering the current radius at which a write or read action is to be performed.

Measuring at $N_r$ different settings of the radial actuator 41 requires $N_r$-1 radial jumps of the radial actuator 41. The most efficient way to combine $N_r$ measurement sweeps of the tilt actuator with $N_r$- 1 radial jumps of the radial actuator 41 is to perform a radial jump between two successive sweeps. Since a radial jump requires access time, there should be non-measuring time between two successive sweeps. This time is provided by selecting the lens wobble amplitude ($A_W$ in figure 5) larger than half the pivot angle measuring range. If the optical lens is wobbled around pivot angle zero, as in this example, meaning that $\psi_{MIN} = -\psi_{MAX}$, this corresponds to selecting the lens wobble amplitude $A_W$ larger than $\psi_{MAX}$, as indicated in figure 5. The time period during which the actual pivot angle $\psi$ is beyond said measuring range [$\psi_{MIN}$, $\psi_{MAX}$], indicated at $t_j$ in figure 5, is available as access time.

It will be clear that the overall measuring time, i.e. for measuring $\psi(i;r_j)[i=1-Ni]$ [$j=1-N_r$] and calculating $N_r$ optimum pivot angles $\psi_{OPT}(r_j)[j=1-N_r]$, depends on a number of factors. Therefore, an optimum setting of the measuring parameters $N_r$, $A_w$, wobble frequency, etc, may be selected as desired. An increase of the number of radii $N_r$ results, of course, in an increase of the number of sweeps and the number of jumps, but a decrease of the required access time in view of the fact that the jump distance decreases, so that the sweep amplitude $A_W$ may be decreased and/or the sweep frequency may be increased. On the other hand, if the rotational speed of the disc is increased, the overall measuring time may be reduced and/or the wobble frequency may be increased and/or the number of radii $N_r$ may be increased. Usually, the measuring parameters will be selected on the basis of a maximum allowed overall measuring time, such maximum being selected with a view to marketing considerations.

Thus, the present invention succeeds in providing a method for compensating tilt of the optical disc 2. The optical lens 34, which is pivotably mounted, is pivoted to an optimum pivot position $\psi_{OPT}$ such that the amplitude $A_{TE}$ of the push-pull tracking error signal $S_{TE}$ is maximal. Said optimum pivot position $\psi_{OPT}$ is determined by measuring said amplitude $A_{TE}$ at different pivot positions $\psi(i)$ and calculating a maximum point ($\psi_{OPT}$, $A_{TE,MAX}$) of a best parabolic fit through the measurements ($\psi(i)$, $A_{TE}(i)$).

It should be clear to a person skilled in the art that the present invention is not limited to the exemplary embodiments discussed above, but that various variations and modifications are possible within the protective scope of the invention as defined in the appending claims.

For instance, although the above indicates that both coordinates $A_{TE,MAX}$ and $\psi_{OPT}$ of the summit of the best parabolic fit for the measurements are calculated, it should be clear that it is not necessary to actually calculate the maximum parameter value $A_{TE,MAX}$: it suffices to calculate the optimum pivot angle $\psi_{OPT}$.

Further, although the present invention is described by showing the amplitude $A_{TE}$ of the push-pull tracking error signal $S_{TE}$ as a function of the pivot angle $\psi$ of the optical lens 34, it is not actually necessary to know the actual pivot angle values $\psi(i)$ and $\psi_{OPT}$. It suffices for the control circuit 90 to know the corresponding values $S_{CT}(i)$ and $S_{CT,OPT}$ of the tilt control signal $S_{CT}$ for the tilt actuator 43. In fact, setting and/or calculating pivot angle is considered to be equivalent to setting and/or calculating tilt control signal, respectively. Further, it is noted that, in the above, a one-spot tracking error signal is used by way of example; as an alternative, another tracking error signal may be used, for instance a three-spot tracking error signal.

Further, it is noted that the one-spot tracking error signal as defined in equation (2) above is not normalised. Instead, a normalized error signal $S_{TEN}$ may be used, obtained for instance according to the formula $S_{TEN} = S_{TE}/S_D$, wherein $S_D$ preferably is filtered by a low-pass filter.

Further, in the above, the amplitude $A_{TE}$ of a tracking error signal is used as tilt-dependent parameter. Alternatively, such tracking error signal may be processed to obtain another tilt-dependent parameter, for instance the peak amplitude, the signal power, the RMS value, the absolute value, the square of the amplitude, etc.

**Claims**

1. Method for compensating tilt ($\theta$) of an optical disc (2) in an optical disc drive apparatus (1), the optical disc drive apparatus comprising an optical lens (34) which is mounted such as to be pivotable; the method comprising the steps of:

    - selecting a tilt-dependent parameter ($A_{TE}$) having an extreme value when the tilt angle is zero;
    - measuring, at a certain radius of the optical disc, the value ($A_{TE}(i)$) of said tilt-dependent parameter for several values ($\psi(i)$) of a pivot angle of said optical lens (34);
    - calculating the optimum pivot angle ($\psi_{OPT}$) corresponding to an optimum point (81) of a parabolic fit (80) through the measurements ($\psi(i)$, $A_{TE}(i)$);
    - selecting said optimum pivot angle ($\psi_{OPT}$) as setting for said optical lens (34) during a write or read action at said certain radius.

2. Method according to claim 1, wherein said pivot angle ($\psi$) is kept constant during a measurement.

3. Method according to claim 1, wherein, after a measurement, said pivot angle ($\psi$) is changed stepwise.

4. Method according to claim 1, wherein said value ($A_{TE}(i)$) of said tilt-dependent parameter is measured as an average value over substantially one disc revolution.

5. Method according to claim 1, wherein, during said measurements, said pivot angle of said optical lens (34) is continuously changed by a harmonic motion of the optical lens.

6. Method according to claim 5, wherein said harmonic motion has a frequency lower than the disc rotation speed.

7. Method according to claim 5, wherein said measurements are to be performed within a predetermined measuring range [$\psi_{MIN}$, $\psi_{MAX}$], and wherein the amplitude ($A_W$) of said harmonic motion is larger than half the size ($\psi_{MAX}$-$\psi_{MIN}$) of said measuring range [$\psi_{MIN}$, $\psi_{MAX}$].

8. Method according to claim 7, wherein, during the time period ($t_j$) that the pivot angle ($\psi$) is outside said measuring range [$\psi_{MIN}$, $\psi_{MAX}$], a radial actuator (41) is controlled to perform a jump to another radius.

9. Method according to claim 1, wherein said optimum pivot angle ($\psi_{OPT}(rj)$) is calculated for a certain number of different measuring radii ($r_j$).

10. Method according to claim 9, wherein a relationship between optimum pivot angle ($\psi_{OPT}(r_j)$) and radius ($r_j$) is stored in a memory (96);
    and wherein, when performing a write or read action at a certain disc radius (r), the pivot angle ($\psi$) of said optical lens (34) is set to an optimum pivot angle ($\psi_{OPT}(r_j)$) on the basis of said relationship stored in said memory.

11. Method according to claim 9, wherein said measurements are performed for one measuring radius during one sweep of the pivot angle ($\psi$) within said measuring range [$\psi_{MIN}$, $\psi_{MAX}$];
    wherein, during the time period ($t_j$) that the pivot angle ($\psi$) is outside said measuring range [$\psi_{MIN}$, $\psi_{MAX}$], a radial actuator (41) is controlled to perform a jump to another radius;
    and wherein said measurements are performed for said other measuring radius during the subsequent sweep of the pivot angle ($\psi$) within said measuring range [$\psi_{MIN}$, $\psi_{MAX}$].

12. Method according to claim 1, wherein said tilt-dependent parameter ($A_{TE}$) is derivable from an output signal ($S_R$) of an optical detector (35) of said optical disc drive apparatus.

13. Method according to claim 12, wherein said tilt-dependent parameter ($A_{TE}$) is a measure for the amplitude of a tracking error signal ($S_{TE}$), preferably a push-pull tracking error signal ($S_{TE}$).

14. Method according to claim 12, wherein said tilt-dependent parameter is a peak amplitude of said tracking error signal, or a signal power of said tracking error signal, or an RMS value of said tracking error signal, or an absolute value of said tracking error signal.

**15.** Optical disc drive apparatus (1), comprising:

- an optical system (30) for scanning tracks of an optical disc (2), which optical system (30) comprises light beam generating means 31, an objective lens 34 for focussing a light beam (32b) on the disc (2), an optical detector (35) for detecting a reflected light beam (32d), said objective lens (34) being mounted such as to be pivotable;
- a controllable pivot actuator (43) for pivoting the objective lens (34) with respect to the disc (2);
- a control circuit (90) having an input (91) for receiving an output signal ($S_R$) from the optical detector (35), and having an output (95) coupled to a control input of said pivot actuator (43);

wherein the control circuit (90) is adapted to perform a tilt compensating method according to any of claims 1-14.

**Patentansprüche**

**1.** Verfahren zum Ausgleichen von Neigung ($\theta$) einer optischen Disk (2) in einer optischen Laufwerkvorrichtung (1), wobei die optische Laufwerkvorrichtung eine optische Linse (34) umfasst, die derart angebracht ist, dass sie schwenkbar ist; wobei das Verfahren folgende Schritte umfasst:

- Wählen eines neigungsabhängigen Parameters ($A_{TE}$), der einen Extremwert aufweist, wenn der Neigungswinkel Null ist;
- Messen, bei einem bestimmten Radius der optischen Disk, des Wertes ($A_{TE}(i)$) des neigungsabhängigen Parameters für mehrere Werte ($\psi(i)$) eines Schwenkwinkels der optischen Linse (34);
- Berechnen des optimalen Schwenkwinkels ($\psi_{OPT}$), der einem optimalen Punkt (81) einer parabolischen Anpassung (80) über die Messungen ($\psi(i)$, $A_{TE}(i)$) entspricht;
- Wählen des optimalen Schwenkwinkels ($\psi_{OPT}$) als Einstellung für die optische Linse (34) während einer Schreib- oder Lesehandlung an dem bestimmten Radius.

**2.** Verfahren nach Anspruch 1, wobei der Schwenkwinkel ($\psi$) während einer Messung konstant gehalten wird.

**3.** Verfahren nach Anspruch 1, wobei nach einer Messung der Schwenkwinkel ($\psi$) schrittweise verändert wird.

**4.** Verfahren nach Anspruch 1, wobei der Wert ($A_{TE}(i)$) des neigungsabhängigen Parameters als Mittelwert über im Wesentlichen eine Diskumdrehung gemessen wird.

**5.** Verfahren nach Anspruch 1, wobei während der Messungen der Schwenkwinkel der optischen Linse (34) durch eine harmonische Bewegung der optischen Linse kontinuierlich verändert wird.

**6.** Verfahren nach Anspruch 5, wobei die harmonische Bewegung eine Frequenz aufweist, die niedriger als die Diskdrehzahl ist.

**7.** Verfahren nach Anspruch 5, wobei die Messungen innerhalb eines vorgegebenen Messbereichs [$\psi_{MIN}$, $\psi_{MAX}$] durchzuführen sind und wobei die Amplitude ($A_W$) der harmonischen Bewegung größer als die halbe Größe ($\psi_{MAX}$-$\psi_{MIN}$) des Messbereichs [$\psi_{MIN}$, $\psi_{MAX}$] ist.

**8.** Verfahren nach Anspruch 7, wobei während des Zeitraums ($t_j$), während dem der Schwenkwinkel ($\psi$) außerhalb des Messbereichs [$\psi_{MIN}$, $\psi_{MAX}$] liegt, ein radialer Aktuator (41) geregelt wird, um einen Sprung zu einem anderen Radius durchzuführen.

**9.** Verfahren nach Anspruch 1, wobei der optimale Schwenkwinkel ($\psi_{OPT}(r_j)$) für eine bestimmte Anzahl verschiedener Messradien ($r_j$) berechnet wird.

**10.** Verfahren nach Anspruch 9, wobei eine Beziehung zwischen optimalem Schwenkwinkel ($\psi_{OPT}(r_j)$) und Radius ($r_j$) in einem Speicher (96) gespeichert wird;
und wobei beim Durchführen einer Schreib- oder Lesehandlung bei einem bestimmten Diskradius ($r$) der Schwenkwinkel ($\psi$) der optischen Linse (34) auf der Grundlage der in dem Speicher gespeicherten Beziehung auf einen optimalen Schwenkwinkel ($\psi_{OPT}(r_j)$) eingestellt wird.

**11.** Verfahren nach Anspruch 9, wobei die Messungen für einen Messradius während eines Durchlaufs des Schwenkwinkels ($\psi$) innerhalb des Messbereichs [$\psi_{MIN}$, $\psi_{MAX}$] durchgeführt werden;
wobei während des Zeitraumes ($t_j$), während dem der Schwenkwinkel ($\psi$) außerhalb des Messbereichs [$\psi_{MIN}$, $\psi_{MAX}$] liegt, ein radialer Aktuator (41) geregelt wird, um einen Sprung zu einem anderen Radius durchzuführen;
und wobei die Messungen für den anderen Messradius während des nachfolgenden Durchlaufs des Schwenkwinkels ($\psi$) innerhalb des Messbereichs [$\psi_{MIN}$, $\psi_{MAX}$] durchgeführt werden.

**12.** Verfahren nach Anspruch 1, wobei der neigungsabhängige Parameter ($A_{TE}$) aus einem Ausgangssignal ($S_R$) eines optischen Detektors (35) der optischen Laufwerkvorrichtung ableitbar ist.

**13.** Verfahren nach Anspruch 12, wobei der neigungsabhängige Parameter ($A_{TE}$) ein Maß für die Amplitude eines Gleichlauffehlersignals ($S_{TE}$), vorzugsweise eines Push-Pull-Gleichlauffehlersignals ($S_{TE}$), ist.

**14.** Verfahren nach Anspruch 12, wobei der neigungsabhängige Parameter eine Spitzenamplitude des Gleichlauffehlersignals oder eine Signalleistung des Gleichlauffehlersignals oder ein Effektivwert des Gleichlauffehlersignals oder ein Absolutwert des Gleichlauffehlersignals ist.

**15.** Optische Laufwerkvorrichtung (1), umfassend:

- ein optisches System (30) zum Abtasten von Spuren einer optischen Disk (2), wobei das optische System (30) ein Lichtstrahlerzeugungsmittel (31), eine Objektivlinse (34) zum Fokussieren eines Lichtstrahls (32b) auf die Disk (2), einen optischen Detektor (35) zum Detektieren eines reflektierten Lichtstrahls (32d) umfasst, wobei die Objektivlinse (34) derart angebracht ist, dass sie schwenkbar ist;
- einen regelbaren Schwenkaktuator (43) zum Schwenken der Objektivlinse (34) in Bezug auf die Disk (2);
- eine Regelschaltung (90) mit einem Eingang (91) zum Empfangen eines Ausgangssignals ($S_R$) von dem optischen Detektor (35) und einem Ausgang (95), der an einen Regeleingang des Schwenkaktuators (43) angekoppelt ist;

wobei die Regelschaltung (90) ausgebildet ist, um ein Neigungsausgleichsverfahren gemäß einem beliebigen der Ansprüche 1-14 auszuführen.

**Revendications**

**1.** Procédé pour compenser l'inclinaison ($\theta$) d'un disque optique (2) dans un appareil unité de disque optique (1), l'appareil unité de disque optique comportant une lentille optique (34) qui est montée de manière à pouvoir pivoter; le procédé comportant les étapes de :

- choix d'un paramètre dépendant de l'inclinaison ($A_{TE}$) ayant une valeur d'extremum quand l'angle d'inclinaison vaut zéro ;
- mesure, à un certain rayon du disque optique, de la valeur ($A_{TE}(i)$) dudit paramètre dépendant de l'inclinaison pour plusieurs valeurs ($\psi(i)$) d'un angle de pivot de ladite lentille optique (34) ;
- calcul de l'angle optimum de pivot ($\Psi_{OPT}$) correspondant à un point optimum (81) d'un ajustement parabolique (80) grâce aux mesures ($\Psi(i), A_{TE}(i)$);
- choix dudit angle de pivot optimum ($\Psi_{OPT}$) comme réglage pour ladite lentille optique (34) pendant une action d'écriture ou de lecture audit certain rayon.

**2.** Procédé selon la revendication 1, dans lequel ledit angle de pivot ($\Psi$) est maintenu constant pendant une mesure.

**3.** Procédé selon la revendication 1, dans lequel, après une mesure, ledit angle de pivot ($\Psi$) est changé par étapes.

**4.** Procédé selon la revendication 1, dans lequel ladite valeur ($A_{TE}(i)$) dudit paramètre dépendant de l'inclinaison est mesurée comme une valeur moyenne sur environ une révolution de disque.

**5.** Procédé selon la revendication 1, dans lequel, pendant lesdites mesures, ledit angle de pivot de ladite lentille optique (34) est continûment changé par un mouvement harmonique de la lentille optique.

**6.** Procédé selon la revendication 5, dans lequel ledit mouvement harmonique a une fréquence inférieure à la vitesse de rotation de disque.

**7.** Procédé selon la revendication 5, dans lequel lesdites mesures doivent être exécutées dans un intervalle de mesure prédéterminé [$\Psi_{MIN}$,$\Psi_{MAX}$] et dans lequel l'amplitude ($A_W$) dudit mouvement harmonique est plus grande que la moitié de la taille ($\Psi_{MIN}$-$\Psi_{MAX}$) dudit intervalle de mesure [$\Psi_{MIN}$,$\Psi_{MAX}$].

**8.** Procédé selon revendication 7, dans lequel, durant la période de temps ($t_j$) où l'angle de pivot ($\Psi$) est hors dudit intervalle mesure [$\Psi_{MIN}$,$\Psi_{MAX}$], un actionneur radial (41) est commandé pour exécuter un saut à un autre rayon.

**9.** Procédé selon la revendication 1, dans lequel ledit angle de pivot optimum ($\Psi_{OPT}(r_j)$) est calculé pour un certain nombre de rayons de mesure différents ($r_j$).

**10.** Procédé selon la revendication 9, dans lequel une relation entre un angle de pivot optimum ($\Psi_{OPT}(r_j)$) et un rayon ($r_j$) est stocké dans une mémoire (96);
et dans lequel, en effectuant une action d'écriture ou de lecture à un certain rayon de disque (r), l'angle de pivot ($\Psi$) de ladite lentille optique (34) est réglé à un angle de pivot optimum ($\Psi_{OPT}(r_j)$) sur la base de ladite relation stockée dans ladite mémoire.

**11.** Procédé selon la revendication 9, dans lequel lesdites mesures sont effectuées pour un rayon de mesure pendant un balayage de l'angle de pivot ($\Psi$) dans ledit intervalle de mesure [$\psi_{MIN}$, $\psi_{MAX}$];
dans lequel, pendant la période de temps ($t_j$) où l'angle de pivot ($\Psi$) est hors dudit intervalle de mesure [$\Psi_{MIN}$,$\Psi_{MAX}$], un actionneur radial (41) est commandé pour exécuter un saut à un autre rayon;
et dans lequel lesdites mesures sont effectuées pour ledit autre rayon de mesure pendant le balayage suivant de l'angle de pivot ($\Psi$) dans ledit intervalle de mesure [$\Psi_{MIN}$,$\Psi_{MAX}$].

**12.** Procédé selon la revendication 1, dans lequel ledit paramètre dépendant de l'inclinaison ($A_{TE}$) est déductible d'un signal de sortie ($S_R$) d'un détecteur optique (35) dudit appareil unité de disque optique.

**13.** Procédé selon la revendication 12, dans lequel ledit paramètre dépendant de l'inclinaison ($A_{TE}$) est une mesure pour l'amplitude d'un signal d'erreur de suivi de piste ($S_{TE}$), de préférence un signal d'erreur de suivi de piste push-pull ($S_{TE}$).

**14.** Procédé selon la revendication 12, où ledit paramètre dépendant de l'inclinaison est une amplitude de crête dudit signal d'erreur de suivi de piste, ou une puissance de signal dudit signal d'erreur de suivi de piste, ou une valeur de RMS dudit signal d'erreur de suivi de piste, ou une valeur absolue dudit signal d'erreur de suivi de piste.

**15.** Appareil unité de disque optique (1), comprenant:

- un système optique (30) pour balayer des pistes d'un disque optique (2), lequel système optique (30) comporte un moyen (31) générateur de faisceau lumineux, une lentille formant objectif (34) pour focaliser un faisceau lumineux (32b) sur le disque (2), un détecteur optique (35) pour détecter un faisceau lumineux réfléchi (32d), ladite lentille formant objectif (34) étant montée de manière à pouvoir pivoter;
- un actionneur de pivot pouvant être commandé (43) pour faire pivoter la lentille formant objectif (34) par rapport au disque (2);
- un circuit de commande (90) ayant une entrée (91) pour recevoir un signal de sortie ($S_R$) du détecteur optique (35), et ayant une sortie (95) couplée à une entrée de commande dudit actionneur de pivot (43) ;

dans lequel le circuit de commande (90) est adapté pour exécuter un procédé de compensation d'inclinaison selon l'une quelconque des revendications 1-14.

FIG.1A

FIG.1B

FIG.2

FIG.3

$i = 1$ — 101

BRING LENS 34 TO POSITION $\psi(i)$ — 102

MEASURE $<A_{TE}(i)>$ — 103

STORE $(\psi(i), <A_{TE}(i)>)$ — 104

$i = i + 1$ — 105

N — READY ? — 106

Y

RETRIEVE ALL $(\psi(i), <A_{TE}(i)>)$ — 107

CALCULATE $\psi_{OPT}$ — 108

BRING LENS 34 TO POSITION $\psi_{OPT}$ — 109

FIG.4

FIG.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6157600 A